# EUROPEAN PATENT SPECIFICATION

(11) **EP 2 660 530 B1**
(45) Date of publication and mention of the grant of the patent: **30.08.2017**
(21) Application number: 11853992.3
(22) Date of filing: 18.11.2011
(51) Int. Cl.: F24H 9/00, F24H 1/14, F28D 1/06, F28D 7/16

(54) **LATENT HEAT EXCHANGER AND HOT WATER SUPPLY DEVICE**
LATENTER WÄRMETAUSCHER UND HEISSWASSERABGABEVORRICHTUNG
ÉCHANGEUR DE CHALEUR LATENTE ET DISPOSITIF D'ALIMENTATION EN EAU CHAUDE

(30) Priority: 27.12.2010 JP 2010290153; 27.12.2010 JP 2010290154; 27.12.2010 JP 2010290155
(43) Date of publication of application: 06.11.2013
(73) Proprietor: Rinnai Corporation, Aichi 454-0802 (JP)
(72) Inventor: OTSUBO Shinya, Nagoya-shi Aichi 454-0802 (JP); NARUSE Hidekatsu, Nagoya-shi Aichi 454-0802 (JP); KOJIMA Yoichi, Nagoya-shi Aichi 454-0802 (JP)
(74) Representative: O'Callaghan, Robert James
(86) International application number: PCT/JP2011/076689
(87) International publication number: WO 2012/090619

(56) References cited:
- EP-A1- 1 795 854
- JP-A- 7 190 651
- JP-A- H07 190 651
- JP-A- 2003 106 679
- JP-A- 2008 292 032
- JP-A- 2008 292 032
- JP-A- 2009 180 398
- JP-A- 2009 180 398
- JP-A- 2010 007 912
- JP-A- 2010 007 912
- JP-A- 2010 043 766
- US-A1- 2009 064 945
- US-A1- 2010 096 103

## Description

### FIELD OF THE INVENTION

The present invention relates to a latent heat exchanger for recovering latent heat by condensing water vapor in combustion gas and a water heater comprising the latent heat exchanger.

### BACKGROUND ART

Conventionally, there has been known a so-called condensing type water heater having a sensible heat exchanger and a latent heat exchanger in an apparatus body. In this kind of the water heater, after sensible heat in combustion gas is absorbed by the sensible heat exchanger, latent heat in the combustion gas is absorbed by the latent heat exchanger. As the latent heat exchanger, there has been proposed one disclosed in, e.g., Patent Document 1 or Patent Document 2, for miniaturization and higher heat efficiency. As shown in Figs. 13 and 15, in such a latent heat exchanger, a plurality of heat absorbing pipes 820 or a plurality of heat absorbing pipes 920 each having a pipe structure in which a straight portion and a circularly arcuate turn-around portion are repeated consecutively, are arranged in a meandering or spiral manner, in a casing where combustion gas flows, and in order to circulate fluid to be heated in the heat absorbing pipes 820 or the heat absorbing pipes 920, upstream ends and downstream ends of the heat absorbing pipes 820 or 920 are connected respectively to an inlet header 830 or 930 and an outlet header 840 or 940 in one side wall 814 or 914 of the casing.

When the latent heat in the combustion gas is absorbed by the latent heat exchanger as described above, strong acidic drain (condensed water) is generated in the casing by cooling water vapor in the combustion gas below the dew point temperature and condensing the water vapor. Thus, in order to prevent corrosion due to the drain, a member made of anti-corrosive metal such as stainless steel or titanium has been used as the casing and the heat absorbing pipe. Further, in order to quickly discharge the drain from the casing inside, a drain discharge opening is formed in a lower area of the casing.

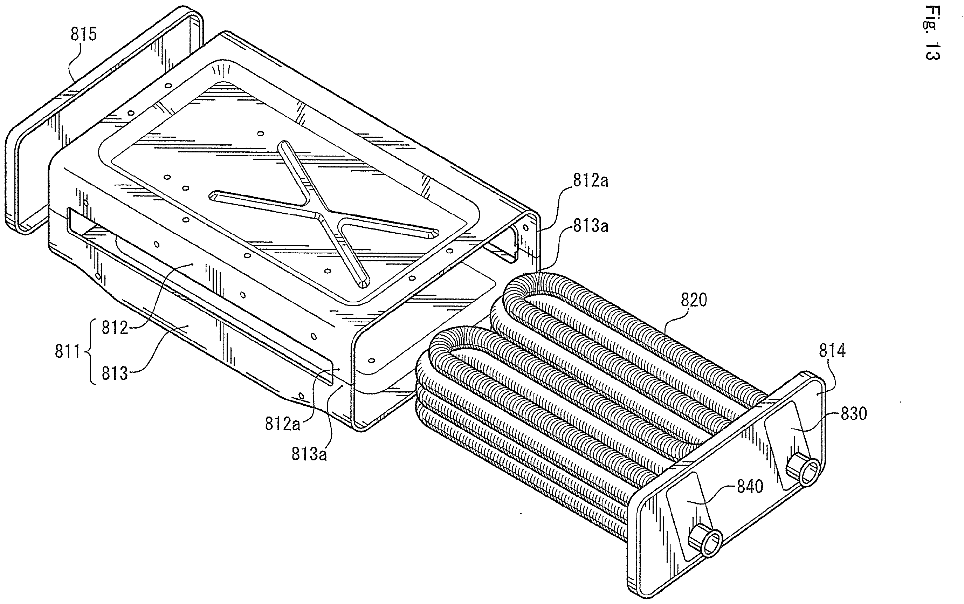

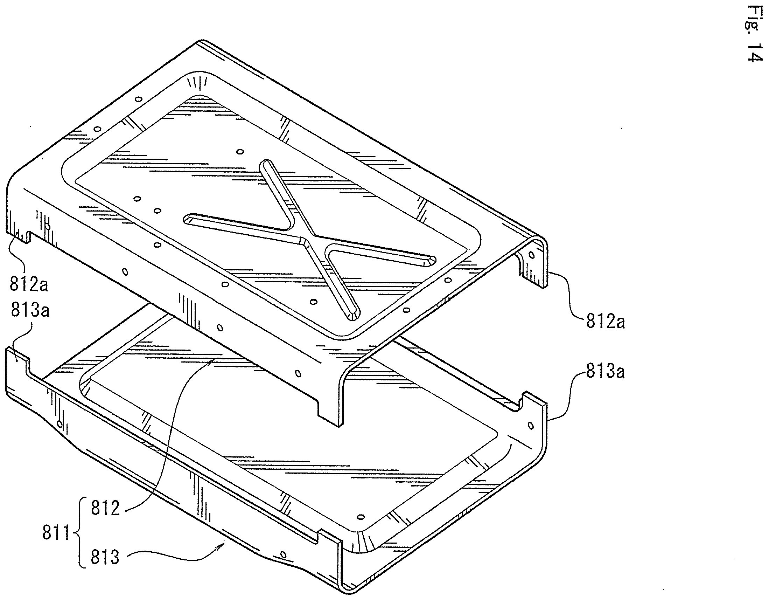

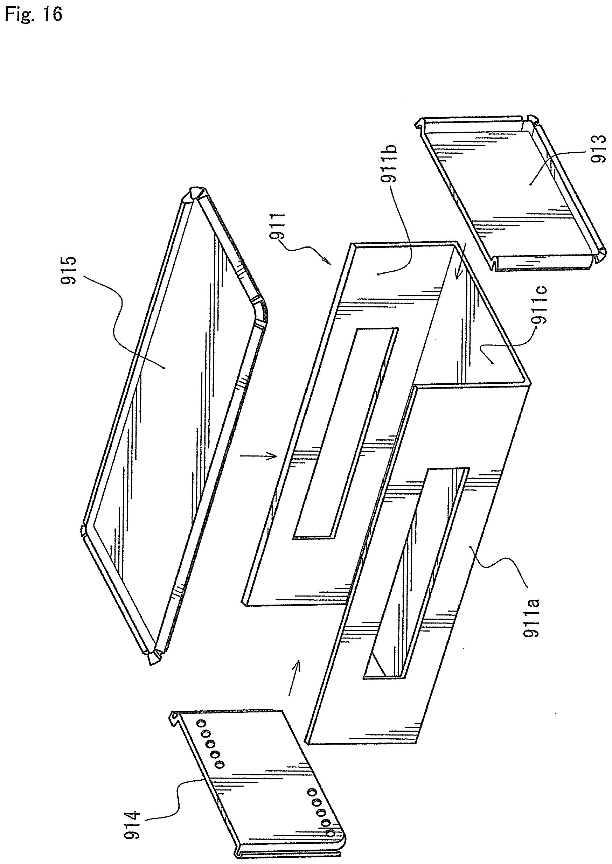

As shown in Fig. 14, in assembling the latent heat exchanger of the Patent Document 1 described above, an upper casing 812 having upper projecting portions 812a projecting downward respectively from four corners thereof and a lower casing 813 having lower projecting portions 813a projecting upward respectively from four corners thereof are welded such that the upper and lower projecting portions 812a, 813a abut each other, whereby a tubular casing body 811 having both-side openings is produced. Subsequently, as shown in Fig. 13, peripheries of the both-side openings of the casing body 811 are welded respectively to an one side wall 814 to which the upstream and downstream ends of the heat absorbing pipes 820 are brazed and the other side wall 815. Similarly, as shown in Fig. 16, a casing of the latent heat exchanger of the Patent Document 2 is produced by brazing a top member 915, a pair of side walls 913, 914, and a main body member 911 having a concave cross-section and serving as a front wall 911a, a back wall 911b, and a bottom wall 911c.

In the latent heat exchanger having the above casing, when strong acid drain dripped from the heat absorbing pipes during an operation proceeds to the lower corners of the casing, the drain easily enters a gap existing in a welded or brazed connection area between the peripheries of the both-side openings of the casing body or the main body member and the side walls, which may result in long-term retention of the strong acid drain in the gap. Further, when metal plates are connected to each other by welding, the metal plates are potentially transformed at the welded area. As such, even if the metal plates inherently excellent in anti-corrosion are used, the anti-corrosion ability partially is deteriorated at the welded area. Thus, there is a problem that the metal plates become easily corroded at both lower sides of the casing where the drain is likely to be retained. Further, in the latent heat exchanger manufactured by connecting many metal plates by welding or brazing, there are problems that a number of members increase and an assembling work becomes complicated due to increase of members to be connected.

### [Prior Arts]

[Patent Document 1] JP2009-180398 A
[Patent Document 2] JP2008-292032 A

### SUMMARY OF THE INVENTION

The present invention has been made to solve the problems described above, and an object of the present invention is to provide a latent heat exchanger, for which miniaturization and higher heat efficiency are required, capable of reducing corrosion due to the drain so as to enhance durability and being produced in a simple process, and a water heater using the latent heat exchanger.

According to one aspect of the present invention, there is provided a latent heat exchanger comprising:
a casing having a flow path of combustion gas therein;
   a heat absorbing pipe accommodated in the casing;
   an inlet header for introducing fluid to be heated into the heat absorbing pipe; and
   an outlet header for discharging the fluid to be heated from the heat absorbing pipe, wherein
   the casing has a box-shaped casing body having an upper opening and a top board closing the upper opening of the casing body,
   the casing body has a back wall, a front wall, a bottom wall having a drain discharging opening, one side wall having an upstream end-inserting hole through which an upstream end of the heat absorbing pipe is inserted and a downstream end-inserting hole through which a downstream end of the heat absorbing pipe is inserted, and another side wall,
   the back wall, the front wall, the bottom wall, the one side wall, and the other side wall are integrally formed by drawing one single metal plate,
   the heat absorbing pipe in the casing has a piping structure in which a straight portion extending between the one side wall and the other side wall and circularly arcuate turn-around portions located at both ends on one side wall side and the other side wall side are repeated consecutively, and
   the inlet header and the outlet header are respectively disposed outside the one side wall and connected to the upstream and downstream ends of the heat absorbing pipe led outside the one side wall through the upstream end-inserting hole and the downstream end-inserting hole; and
   a side baffle plate in a plate shape provided between the circularly arcuate turn-around portions located on the other side wall side and an inner surface of the other side wall, wherein
   an upper end of the side baffle plate is connected to a lower surface of the top board, and
   a lower end of the side baffle plate is disposed such that the lower end does not abut an inner surface of the bottom wall.

According to the present invention, since no connection area by welding or brazing is formed in a lower area of the casing of the latent heat exchanger, drain is not likely to be retained in the lower area of the casing. Therefore, it makes possible to smoothly discharge the drain from the drain discharge opening provided at the lower area of the casing. As a result, corrosion of the metal plates due to the drain can be reduced, whereby it makes possible to provide the latent heat exchanger and the water heater excellent in durability. Further, since the casing is formed by closing the upper opening of the casing body, whose walls are integrally formed by the drawing, with the top board, it makes possible to manufacture the latent heat exchanger easily with fewer members.

### BRIEF DESCRIPTION OF THE DRAWINGS

Fig. 1 is a schematic perspective view showing one example of a latent heat exchanger according to an embodiment 1 of the present invention;
Fig. 2 is a schematic exploded perspective view of Fig. 1;
Fig.3 is a partial schematic cross-sectional view showing an internal structure on the other side wall side of the latent heat exchanger according to the embodiment 1 of the present invention;
Fig. 4 is a schematic perspective view showing a side baffle plate according to the embodiment 1 of the present invention;
Fig.5 is a schematic perspective view showing a heat absorbing pipe according to the embodiment 1 of the present invention;
Fig.6 is a schematic cross-sectional view showing a circularly arcuate turn-around portion of the heat absorbing pipe according to the embodiment 1 of the present invention;
Fig.7 is a schematic cross-sectional view showing a straight portion of the heat absorbing pipe according to the embodiment 1 of the present invention;
Fig. 8 is a schematic cross-sectional view as taken along A-A of Fig. 1;
Fig. 9 is a partial schematic cross-sectional view showing a connection step for connecting a casing body and a top board by a fastening process according to the embodiment 1 of the present invention, wherein Fig. 9A shows a state before connection and Fig 9B shows a state after connection;
Fig. 10 is a schematic block diagram showing one example of a water heater according to the embodiment 1 of the present invention;
Fig. 11 is a schematic perspective view showing one example of a latent heat exchanger according to an embodiment 2 of the present invention;
Fig. 12 is a schematic block diagram showing one example of a water heater according to the embodiment 2 of the present invention;
Fig. 13 is a schematic perspective view showing one example of a conventional latent heat exchanger;
Fig. 14 is a schematic perspective view showing a casing body of Fig. 13;

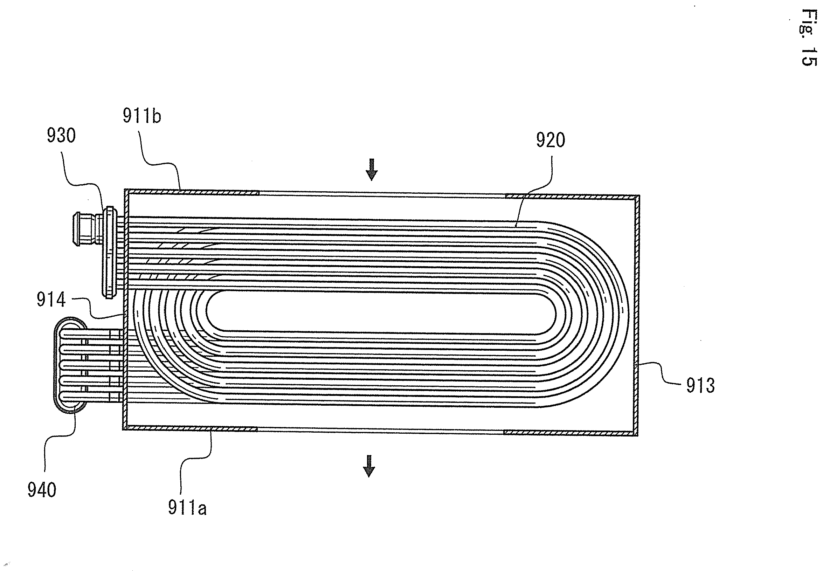

Fig. 15 is a schematic perspective view showing another example of a conventional latent heat exchanger; and
Fig. 16 is a schematic perspective view showing a casing of Fig. 15.

### PREFERRED MODE FOR CARRYING OUT THE INVENTION

### (Embodiment 1)

Hereinafter, a latent heat exchanger and a water heater having the latent heat exchanger according to an embodiment of the present invention will be described in detail.

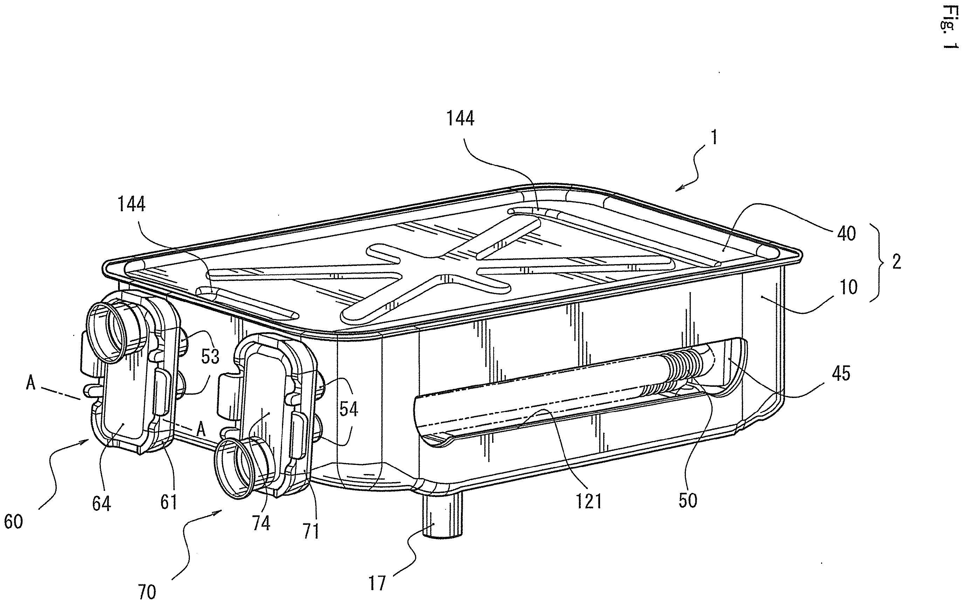

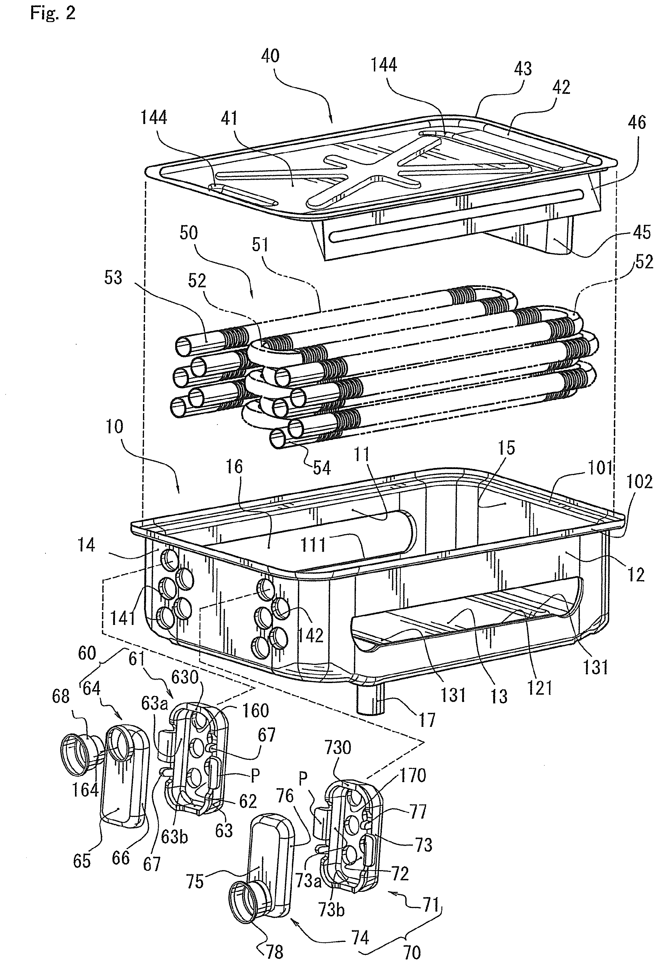

Fig. 1 is a schematic perspective view showing one example of the latent heat exchanger according to the embodiment 1 of the present invention, and Fig. 2 is a schematic exploded perspective view of Fig. 1.

As shown in Figs. 1 and 2, a casing 2 of the latent heat exchanger of the embodiment has a box-shaped casing body 10 having an upper opening 16 and a top board 40 closing the upper opening 16 of the casing body 10. Those casing body 10 and top board 40 are respectively formed from one thin plate made of a metal having anti-corrosion such as stainless steel.

A casing body 10 has a back wall 11, a front wall 12, a bottom wall 13, one side wall 14, and the other side wall 15. The casing body 10 is integrally formed in a box shape and has the upper opening 16, by drawing one single metal plate. More in detail, the back and front walls 11, 12 rise from front and back edges of the plate shaped bottom wall 13 extending in a predetermined direction, and those walls 11 and 12 are integrally connected to the bottom wall 13 via corners. Also, the one and other side walls 14, 15 rise from right and left edges of the bottom wall 13, and those side walls 14, 15 are integrally connected to the bottom wall 13 via corners. Further, right and left edges of each of the back and front walls 11, 12 are connected integrally to the one and other side walls 14, 15, respectively, via corners. With this configuration, an internal space having the upper opening 16, that is surrounded by the back wall 11, the front wall 12, the bottom wall 13, and the both side walls 14, 15, is formed in the casing body 10. In the present embodiment, a mounting portion 101 for mounting thereon a top board 40 when the casing body 10 and the top board 40 are connected to each other by a fastening process, that is bent the respective walls 11, 12, 14, 15 in the horizontal direction, and an upper flange portion 102 for fastening the top board 40 therein by the fastening process (to be described later), that is bent upwardly from the mounting portion 101, are consecutively formed at opening ends of the back wall 11, the front wall 12, and the both side walls 14, 15.

Accordingly, when the casing body 10 according to the embodiment is manufactured, there is no need of welding or brazing. Further, since no connection area by welding or brazing is formed at a lower area of the casing 2 having the casing body 10, the drain is not likely to be retained in the lower area when the drain is generated. Furthermore, since the back wall 11, the front wall 12, the bottom wall 13, and the one and other side walls 14, 15 are integrally formed by the drawing, the casing 2 can be easily formed with fewer members.

A combustion gas inlet port 111 for introducing the combustion gas into the casing and a combustion gas outlet port 121 for discharging the combustion gas out of the casing, that are opened in a laterally long rectangular shape, are respectively formed at substantially center areas in both up-down and left-right directions of the back wall 11 and the front wall 12, when a latent heat exchanger 1 is assembled in an apparatus body of a water heater. With this configuration, a flow path of the combustion gas communicating from the combustion gas inlet port 111 to the combustion gas outlet port 121 is formed inside the casing 2. A shape and an opened position of the combustion gas inlet port 111 or the combustion gas outlet port 121 can be appropriately set according to the form of use. For example, according to the form of the water heater, the combustion gas inlet port 111 may be formed at the bottom wall 13 or the combustion gas outlet port 121 may be formed at the top board 40.

The bottom wall 13 is inclined downward from a back wall 11 side to a front wall 12 side in order to smoothly discharge the drain out of the casing 2 upon a generation of the drain, and a drain discharge opening 17 for discharging the drain is opened in the lowest area of the inclined plane. The drain discharge opening 17 is connected to a neutralizer via a discharge pipe (not shown). Lower protrusions 131, 131 are formed in the bottom wall 13 by the drawing so as to protrude inwardly into the casing 2 from both ends (one side wall 14 side end and the other side wall 15 side end) in the left-right direction, in a state where the casing body 10 and the top board 40 are connected to each other. The lower protrusions 131, 131 are respectively formed at a location abutting circularly arcuate turn-around portions 52 of a bottommost heat absorbing pipe 50.

A plurality of upstream end-inserting holes 141 through which upstream ends 53 of the heat absorbing pipes 50 are inserted and a plurality of downstream end-inserting holes 142 through which downstream ends 54 of the heat absorbing pipes 50 are inserted are formed, by burring, in both ends (the back wall 11 side end and the front wall 12 side end) of the one side wall 14 in the front-back direction, as many as the heat absorbing pipes 50. In the present embodiment, the upstream end-inserting holes 141 and the downstream end-inserting holes 142 are respectively arranged in two rows, which are staggered with respect to each other. The number and arrangement of the inserting holes 141, 142 can appropriately be selected in accordance with the number of the heat absorbing pipes 50. The other side wall 15 is same as the one side wall 14 except that the upstream end-inserting holes 141 and the downstream end-inserting holes 142 are not formed.

The top board 40 has a top board body 41 in a flat plate shape, a standing strip 42 formed by bending upward an entire periphery of the top board body 41, and a lower flange portion 43 formed by bending back an entire periphery of the standing strip 42 in a horizontal direction. The top board 40 is formed by drawing one single metal plate, same as the casing body 10. The standing strip 42 is sized so as to fit within an inner periphery of the upper opening 16, which is surrounded by the back wall 11, the front wall 12, the one and other side walls 14, 15 of the casing body 10. Further, the lower flange 43 is sized so as to be mounted on the mounting portion 101. Furthermore, upper protrusions 144, 144 are formed in the top board body 41 by the drawing so as to protrude inwardly into the casing 2 from both ends (the one side wall 14 side end and the other side wall 15 side end) in the left-right direction, in a state where the casing body 10 and the top board 40 are connected to each other. The upper protrusions 144, 144 are respectively formed at a location abutting circularly arcuate turn-around portions 52 of an uppermost heat absorbing pipe 50 as described later.

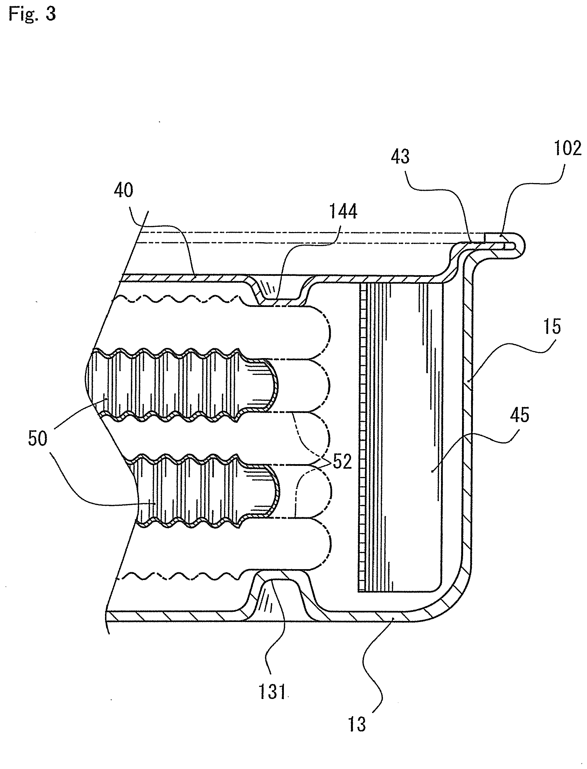

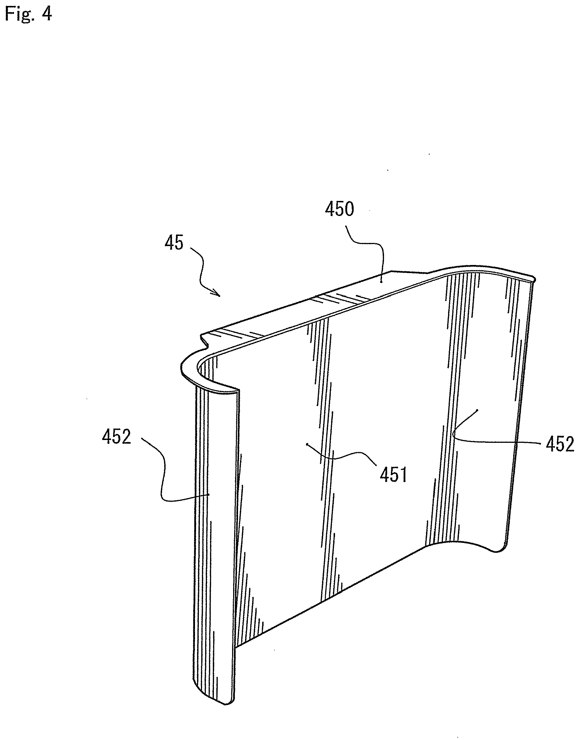

As shown in Figs. 3 and 4, an upper end of a side baffle plate 45 in a flat plate shape is welded to a lower surface of the top board 40 on the other side wall 15 side. The side baffle plate 45 is arranged in the casing 2 such that a plate portion 451 extends along a flow path direction of the combustion gas in a state where the casing body 10 and the top board 40 is connected to each other. That is, the casing body 10 integrally formed by the drawing is used in the latent heat exchanger 1 according to the present embodiment, so that it is necessary to lead out the upstream and downstream ends 53, 54 of the heat absorbing pipes 50 through the one side wall

14 in connecting the upstream and downstream ends 53, 54 of the heat absorbing pipes 50 respectively to an inlet header 60 and an outlet header 70 disposed outside the one side wall 14. Thus, when the upstream and downstream ends 53, 54 of the heat absorbing pipes 50 are inserted through the upstream end-inserting holes 141 and the downstream end-inserting holes 142, respectively, there occurs a space having a certain volume between ends of the circularly arcuate turn-around portions 52 on the other side wall 15 side and an inner surface of the other side wall 15. This causes the combustion gas introduced through the combustion gas inlet port 111 to flow in the space with less gas glow resistance, which may result in preventing the combustion gas from efficiently contacting the heat absorbing pipes 50 and reducing in heat efficiency. However, providing the side baffle plate 45 in the space between the ends of the circularly arcuate turn-around portions 52 on the other side wall 15 side and the inner surface of the other side wall 15 causes the combustion gas to flow toward the heat absorbing pipes 50 side, making it easy for the combustion gas to contact the heat absorbing pipes 50, thereby allowing enhancement of the heat efficiency. In addition, since the upper end of the side baffle plate 45 is connected to the lower surface of the top board 40, the casing 2 can be fabricated simply by closing the upper opening 16 of the casing body 10 with the top board 40 to which the side baffle plate 45 has been connected.

Further, as shown in Fig. 4, the side baffle plate 45 according to the present embodiment is formed of a flat plate portion 451 having, at an upper end thereof, a connection portion 450 for connecting to the lower surface of the top board 40 and inclined faces 452, 452 respectively inclined in a manner curved, from ends on a combustion gas inlet port 111 side and a combustion gas outlet port 121 side toward the heat absorbing pipes 50. With this configuration, since the combustion gas introduced into the casing 2 from the combustion gas inlet port 111 flows along the inclined faces 452, 452 on the combustion gas inlet port 111 side and the combustion gas outlet port 121 side, it makes easier for the combustion gas to contact the heat absorbing pipes 50, thereby allowing further enhancement of the heat efficiency. Alternatively, the inclined faces 452, 452 may be linearly inclined.

Further, as shown in Fig. 3, the side baffle plate 45 is formed such that a lower end thereof does not abut an inner surface of the bottom wall 13. If the side baffle plate 45 extends to such an extent that the lower end thereof abuts the bottom wall 13, vibration of the side baffle plate 45 is transmitted both to the top board 40 and the bottom wall 13 when the combustion gas passes inside the casing 2, resulting in easy generation of noise. However, the side baffle plate 45 only abuts the lower surface of the top board 40 but not the bottom wall 13, so that such noise can be prevented. Further, flow of drain is not disturbed, so that it makes possible to discharge the drain smoothly. Moreover, since no connection area is formed between the bottom wall 13 and the side baffle plate 45, there is no need to take care of crevice corrosion due to the drain.

Referring back to Fig. 2, an upper baffle plate 46 is connected to the top board 40, that is inclined downward from the lower surface of the top board 40 on the front wall 12 side toward an entire upper edge of the opening of the combustion gas outlet port 121. With this configuration, the combustion gas introduced from the combustion gas inlet port 111 is further suppressed from an upper side to the heat absorbing pipe 50 side, it makes easy for the combustion gas to contact the heat absorbing pipes 50 and to smoothly discharge out of the casing 2 from the combustion gas outlet port 121 along the upper baffle plate 46 on the combustion gas outlet port 121 side.

Inside the casing 2, a plurality of (five, in the present embodiment) heat absorbing pipes 50 through which tap water serving as fluid to be heated flows are accommodated in a meandering manner with a gap allowing passage of the combustion gas provided between one another. The upstream and downstream ends of the heat absorbing pipes 50 are respectively led outside the one side wall 14 through the upstream end-inserting hole 141 and the downstream end-inserting hole 142 formed in the one side wall 14, as described above.

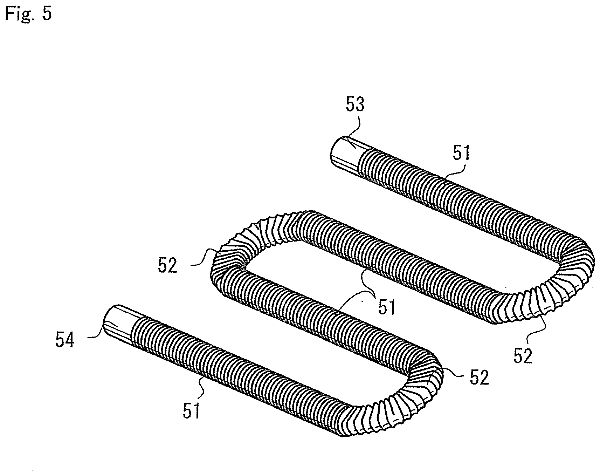

Fig. 5 is a schematic perspective view showing one of the heat absorbing pipes 50. The heat absorbing pipe 50 according to the present embodiment is formed by bending a plurality of portions of a corrugate pipe (pipe having an outer shape in which ridge portions and valley portions continuously alternate in an axial direction thereof) made of an anti-corrosion metal such as stainless steel. Further, the heat absorbing pipe 50 has a pipe structure in which a straight portion 51 and the circularly arcuate turn-around portion 52 are repeated consecutively and has a wave shape in which the straight portions 51 and the circularly arcuate turn-around portions 52 are made to meander in one plane. (In Figs. 1, 2 and so on, a part of the straight portion 51 is only described as the corrugate pipe for avoiding complication.) Each of the heat absorbing pipes 50 is accommodated in the casing 2 such that the straight portion 51 extends in the left-right direction between the one and other side walls 14, 15 and the circularly arcuate turn-around portions 52 are disposed at both ends (the one side wall 14 side end and the other side wall 15 side end) in the left-right direction. A plurality of the heat absorbing pipes 50 formed by connecting the straight portion 51 to the circularly arcuate turn-around portions 52 bent at one direction may be used and such heat absorbing pipes 50 may be accommodated in a spiral manner in the casing 2.

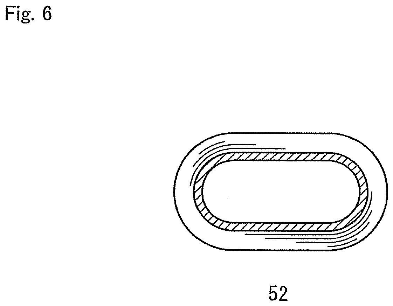

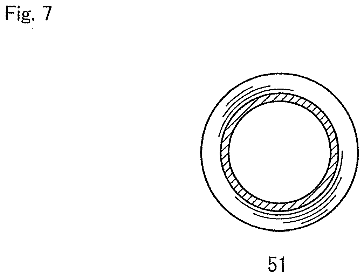

As shown in Figs. 5 and 6, the circularly arcuate turn-around portions 52 of the heat absorbing pipes 50 each have a cross section flattened in a direction that the heat absorbing pipes 50 are stacked one another. Fig. 6 shows a cut shape of the valley portion of the heat absorbing pipe 50. On the other hand, as shown in Fig. 7, the valley portion of the straight portion 51 of the heat absorbing pipe 50 has a circular cross section.

As shown in Figs. 2 and 3, the heat absorbing pipes 50 each are stacked at the flattened circularly arcuate turn-around portions 52. With this configuration, a gap between the heat absorbing pipes 50 adjacent to each other is narrowed in the stacking direction of the heat absorbing pipes 50, whereby the heat absorbing pipes 50 are arranged densely. As a result, it makes possible to downsize the latent heat exchanger 1 and to bring into contact the combustion gas with the heat absorbing pipes 50 efficiently.

The heat absorbing pipes 50 stacked one another are displaced by half-pitch in a wavelength direction of the wave shape. That is, in Fig. 2, with respect to a second heat absorbing pipe 50 from the top and a second heat absorbing pipe 50 from the bottom, their adjacent heat absorbing pipes 50 are provided at positions displaced by half-pitch in an upstream side of the flow path of the combustion gas (to the combustion gas inlet port 111 side).

The flattened circularly arcuate turn-around portions 52 of the uppermost heat absorbing pipe 50 and the bottommost heat absorbing pipe 50, which are positioned at the both ends (both ends on the one side wall 14 side and the other wall 15 side) in the left-right direction, abut the above-described upper protrusions 144 formed in the top board 40 and the lower protrusions 131 formed in the bottom wall 13, respectively. With this configuration, without using other member for fixing the heat absorbing pipes 50, the heat absorbing pipes 50 can be fixed stably in the casing 2. Also, vibration of the heat absorbing pipes 50 due to water hammer phenomenon or the like can be reduced. Further, since other member for fixing the heat absorbing pipes 50 is not arranged in the flow path of the combustion gas except for the heat absorbing pipes 50, it makes possible to bring into contact the combustion gas with the heat absorbing pipes 50 efficiently.

As described above, the upstream and downstream ends 53, 54 of the heat absorbing pipes 50 are respectively led outside the casing 2 through the upstream end-inserting holes 141 and the downstream end-inserting holes 142 formed in the one side wall 14. Further, as shown in Fig. 1, the upstream and downstream ends 53, 54 are respectively connected to the inlet header 60 and the outlet header 70 disposed outside the one side wall 14. As such, the upstream and downstream ends 53, 54 of the heat absorbing pipes 50 are connected to the inlet and outlet headers 60, 70, respectively and thus, as a whole, the plurality of heat absorbing pipes 50 are connected in parallel. This reduces a water-passing resistance as compared to a case where the heat absorbing pipes 50 are connected in series.

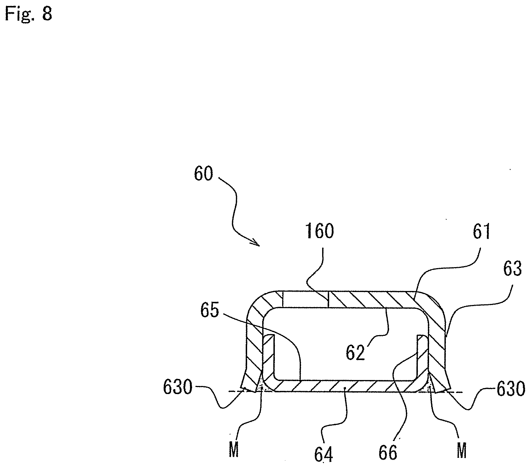

The inlet and outlet headers 60, 70 which are respectively connected to the upstream and downstream ends 53, 54 of the heat absorbing pipes 50 are arranged outside the one side wall 14 of the casing body 10. As shown Figs. 1 to 2 and further Fig. 8 showing a cross-sectional view as taken along A-A of Fig. 1, the both headers 60, 70 respectively have header main bodies 61, 71 in a dish shape and header covers 64, 74 in a dish shape to be internally fitted respectively to the header main bodies 61, 71. The both headers 60, 70 are formed respectively by connecting their members by brazing such that openings of the header main bodies 61, 71 and those of the header covers 64, 74 face each other. The outlet header 70 according to the present embodiment has the same configuration as that of the inlet header 60 except for using the header cover 74 obtained by turning upside down the header cover 64 of the inlet header 60. Thus, a description will be given mainly of the inlet header 60 below.

As seen well in Fig. 8, the header main body 61 has a main body bottom plate 62 having connection holes 160 to be connected to the upstream ends 53 of the heat absorbing pipes 50 and a main body peripheral wall 63 raised from a peripheral end of the main body bottom plate 62 toward a header cover 64 side and opened toward the header cover 64 side, in a state where the header main body 61 and the header cover 64 are fitted to each other. In the embodiment, the both headers 60, 70 are provided adjacent to the one side wall 14. However, the upstream ends 53 or the downstream ends 54 of the heat absorbing pipes 50 may be further extended apart from the casing 2 and the upstream ends 53 or the downstream ends 54 of the extended heat absorbing pipes 50 may be connected to the inlet header 60 or the outlet header 70.

The main body peripheral wall 63 of the header main body 61 is made to extend such that at least a part of a main body open end 630 is positioned higher than an outer peripheral surface of a cover bottom plate 65 in a cross-sectional direction, in a state where the header cover 64 is fitted to the header main body 61. Also, as shown in Fig. 2, the main body peripheral wall 63 of the header main body 61 is formed into substantially a rectangular shape having a pair of long sides 63a and a pair of short sides 63b. Further, as shown in Fig. 8, the main body open end 630 of the long and short sides 63a, 63b is formed so as to wide outwardly. With this configuration, when the header main body 61 and the header cover 64 are brazed to each other, a brazing reservoir M is formed between an inner surface of the main body peripheral wall 63 and an outer surface of a cover peripheral wall 66. As a result, it makes possible to enlarge a connection area to be brazed between the inner surface of the main body peripheral wall 63 and the outer surface of a cover peripheral wall 66. Further, since a brazing material spreads in the brazing reservoir M, it makes possible to prevent the brazing material from depositing on unnecessary area during the brazing process, as compared to a case where the brazing material is applied only on edge face of the main body open end 630.

Further, according to the present embodiment, claws 67, 67, which are bent toward the header cover 64 side after the header main body 61 and the header cover 64 are fitted to each other, are respectively formed in the main body open end 630 of the opposing long sides 63a of the header main body 61. Those claws 67, 67 are arranged such that they are not overlapped in a short side 63b direction. Specifically, in the embodiment, since the header main body 61 and the header cover 64 fitting into the header main body 61 are brazed, it is necessary to press the header cover 64 into the header main body 61 before the brazing. However, since the peripheral walls 63, 66 of the header main body 61 and the header cover 64 have fabrication errors respectively, there is a possibility that the header cover 64 cants with respect to the header main body 61 or the header cover 64 removes from the header main body 61 after pressing-in. From this point of view, the claws 67 to be bent toward the header cover 64 side are formed in the main body open end 630 of the main body peripheral wall 63. Thus, after the header cover 64 and the header main body 61 are fitted to each other, the claws 67 abutting an outer peripheral surface of the header cover 64 suppress backlash of the header cover 64, thereby reliably preventing shift of the header cover 64. Further, forming the claws 67 in the main body open end 630 of the long sides 63a allows the header cover 64 to be fixed to the header main body 61 avoiding an inflow port 164 to which a water supply pipe is connected. The number of the claws 67 may be one, or three or more in accordance with a size of the header main body 61. In a case where the main body open end 630 of the main body peripheral wall 63 has the claw 67, the main body open end 630 preferably is extended such that a part of the main body open end 630 other than a part in which the claw 67 is formed, is equal to or higher than the outer peripheral surface of the cover bottom plate 65 in a cross sectional direction upon fitting the header cover 64 to the header main body 61.

The header cover 64 connected to the header main body 61 has the cover bottom plate 65 and the cover peripheral wall 66 raised from a peripheral end of the cover bottom plate 65 toward a header main body 61 side and opened toward the header main body 61 side, in a state where the header main body 61 and the header cover 64 are fitted to each other. The cover peripheral wall 66 is formed into a substantially rectangular shape having a pair of long sides and a pair of short sides, same as the main body peripheral wall 63 of the header main body 61, such that the outer surface of the cover peripheral wall 66 fits into the inner surface of the main body peripheral wall 63.

As shown in Fig. 2, the inflow port 164 and an outflow port (not shown) are respectively formed near an upper end of the cover bottom plate 65 and a lower end of the cover bottom plate 75 by burring. Joint cylinders 68, 78 for connecting respectively to the water supply pipe and a connection pipe connecting to an upstream end of a pipe body of a sensible heat exchanger are attached respectively to the inflow port 164 and the outflow port. With this configuration, the fluid to be heated flows from the inlet header 60 to the outlet header 70 via the plurality of the heat absorbing pipes 50 and water vapor in the combustion gas is condensed on outer surfaces of the heat absorbing pipes 50, resulting in recovery of the latent heat.

Next, one example of a manufacturing method of the latent heat exchanger according to the embodiment will be described in detail.

In manufacturing the latent heat exchanger 1, firstly, the upstream and downstream ends 53, 54 of the heat absorbing pipes 50 are respectively inserted through the upstream end-inserting holes 141 and the downstream end-inserting holes 142 of the one side wall 14 of the casing body 10 formed by the drawing and the upstream and downstream ends 53, 54 of the heat absorbing pipes 50 are led outside the one side wall 14 by a predetermined length. Then, the brazing material (for example, nickel-based brazing paste) is applied to boundaries between outer surfaces of the led-out heat absorbing pipes 50 and the upstream ends-inserting holes 141 and the downstream ends-inserting holes 142. Subsequently, the upstream and the downstream ends 53, 54 of the led-out heat absorbing pipe 50 are respectively inserted through the connection holes 160, 170 of the header main bodies 61, 71 and the brazing material is applied to boundaries between the outer surfaces of the upstream and the downstream ends 53, 54 and the connection holes 160, 170. The brazing material can be pre-applied at inner surfaces of the upstream end-inserting holes 141 and the downstream end-inserting holes 142 of the one side wall 14 and inner surfaces of the connection holes 160, 170 of the header main bodies 61, 71.

Alternatively, the joint cylinders 68, 78 are respectively inserted into the inflow port 164 and the outflow port (not shown) of the header covers 64, 74 in advance and those are prefixed by applying brazing material to their boundaries. Then, the header covers 64, 74 are placed between jig holding portions P, P formed in the main body peripheral walls 63, 73 of the header main bodies 61, 71 and a pushing jig (not shown) such that the openings of the header covers 64, 74 and those of the header main bodies 61, 71 face each other, and the header covers 64, 74 are pressed into the header main bodies 61, 71 by the pushing jig. After pressing-in, the claws 67, 77 formed in the main body open ends 630, 730 of the main body peripheral walls 63, 73 are respectively bent toward the header covers 64, 74 sides and further the brazing material is applied into the brazing reservoirs M formed between the inner surfaces of the main body peripheral walls 63, 73 and the outer surfaces of the cover peripheral walls 66, 76. At this time, although the claws 67, 77 are respectively bent toward the header covers 64, 74 sides, the brazing material penetrates into base portions of the claws 67, 77 by penetrating ability of the brazing material.

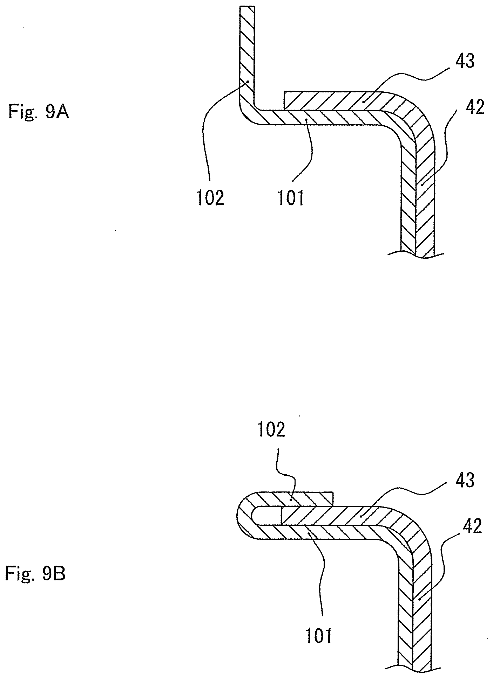

Next, as shown in Fig. 9A, the top board 40 is disposed on the casing body 10 such that the lower flange portion 43 of the top board 40 is mounted on the mounting portion 101 formed at an peripheral edge of the upper opening 16 of the casing body 10. At this time, the upper protrusions 144 formed in the top board 40 and the lower protrusions 131 formed in the bottom wall 13 respectively abut the circularly arcuate turn-around portions 52 of the uppermost and bottommost heat absorbing pipes 50. Further, the side baffle plate 45 formed in the lower surface of the top board 40 on the other side wall 15 side is inserted into the space formed between the ends of the circularly arcuate turn-around portions 52 on the other side wall 15 side and the inner surface of the other side wall 15. Furthermore, the upper baffle plate 46 formed in the lower surface of the top board 40 on the front wall 12 side is disposed so as to downward incline from the lower surface of the top board 40 toward the entire upper edge of the opening of the combustion gas outlet port 121.

Then, as shown in Fig. 9B, the fastening process is performed for bending the upper flange portion 102 of the casing body 10 against the lower flange portion 43 of the top board 40, whereby the upper opening 16 of the casing body 10 is closed by the top board 40. With this, a subassembly in which the heat absorbing pipes 50, the inlet header 60, and the like are prefixed is assembled. As described above, in the present embodiment, the walls 11, 12, 13, 14, 15 of the casing body 10 are integrally formed by drawing the single metal plate, and only the upper opening 16 of the casing body 10 with less affected by the drain is closed by the top board 40. Thus, it is possible to produce the casing 2 having an excellent corrosion resistance without performing welding or brazing but simply by connecting the casing body 10 and the top board 40 by the fastening process.

Finally, the subassembly is placed in a heating furnace and a brazing process is performed. With this, members are fixed at portions to which the brazing materials are applied and the latent heat exchanger 1 is produced. Since the casing body 10 and the heating absorbing pipes 50 are subject to the heating (solution-annealed) during the brazing process, residual stresses in the casing body 10 generated by the drawing process and the circularly arcuate turn-around portions 52 are removed, so that even upon contacting with the strong acidic drain, stress-corrosion cracking can be prevented.

Next, one example of a water heater according to the present embodiment will be described in detail.

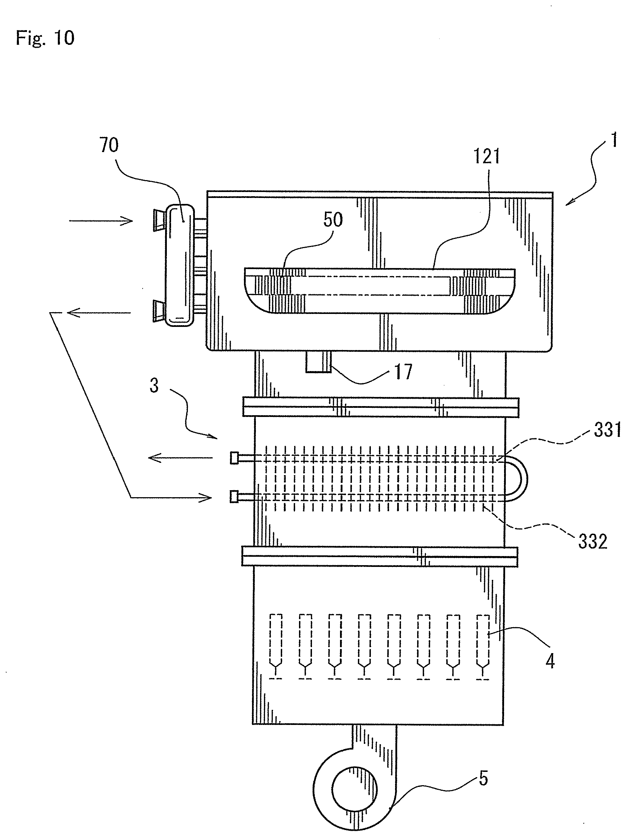

Fig. 10 is a schematic block diagram showing the water heater according to the embodiment 1. A sensible heat exchanger 3 and the latent heat exchanger 1 are located in an apparatus body (not shown).

As shown in Fig. 10, the sensible heat exchanger 3 is arranged below the latent heat exchanger 1. Also, a gas burner 4 for burning gas supplied from a gas supply pipe is arranged below the sensible heat exchanger 3 and further an air supply fan 5 for supplying combustion air is arranged below the gas burner 4.

The sensible heat exchanger 3 comprises a number of fins 332 arranged in parallel and a meandering pipes 331 passing through the fins 332. The sensible heat exchanger 3 and the latent heat exchanger 1 are partitioned into upper and lower regions by the bottom wall 13 of the casing body 10.

The sensible heat exchanger 3 communicates with the latent heat exchanger 1 via the combustion gas inlet port 111 described above. The combustion gas supplied into the latent heat exchanger 1 from the sensible heat exchanger 3 via the combustion gas inlet port 111 passes through the latent heat exchanger 1 and thereafter it is discharged out of the apparatus body from the combustion gas outlet port 121.

In the water heater of the present embodiment, the combustion gas is produced by combustion of the gas burner 4 and the sensible heat exchanger 3 and the latent heat exchanger 1 are heated by the combustion gas. Then, sensible heat in the combustion gas is absorbed by the sensible heat exchanger 3 and latent heat in the combustion gas absorbed the sensible heat is absorbed by the latent heat exchanger. At this time, water vapor in the combustion gas is cooled below the dew point temperature, so that the strong acidic drain is generated and the drain generated in the latent heat exchanger 1 drips on the bottom wall 13 of the casing body 10. As described above, however, the latent heat exchanger 1 of the present embodiment has the casing body 10 whose walls 11, 12, 13, 14, 15 are integrally formed by the drawing, so that no connection area by welding or brazing is formed in the lower area of the casing 2. Therefore, the drain is not likely to be retained in the lower area of the casing 2, whereby it makes possible to discharge the drain smoothly from the discharge opening 17 to the neutralizer. As a result, corrosion of the casing 2 due to the drain can be reduced, whereby the water heater having high durability can be obtained.

The joint cylinder 68 of the inlet header 60 is connected to the water supply pipe for introducing cold water from a water supply source such as a water pipe and the joint cylinder 78 of the outlet header 70 is connected to a connection pipe communicating to an upstream end of pipes 331 of the sensible heat exchanger 3. Therefore, the cold water supplied from the water supply pipe is heated to be hot water during passing through the latent heat exchanger 1 and the sensible heat exchanger 3 and thereafter the hot water is supplied to a hot-water supplying terminal such as a bathroom or a kitchen, from a hot-water supply pipe connected to a downstream end of pipes 331 of the sensible heat exchanger 3.

### (Embodiment 2)

Although in the above embodiment 1, a latent heat exchanger used for a water heater having a single heating circuit has been described, in this embodiment 2, a latent heat exchanger used for a water heater having two heating circuits will be described. The same elements as those of the latent heat exchanger and the water heater in the embodiment 1 are denoted by the same reference numerals, and a description thereof will be are omitted.

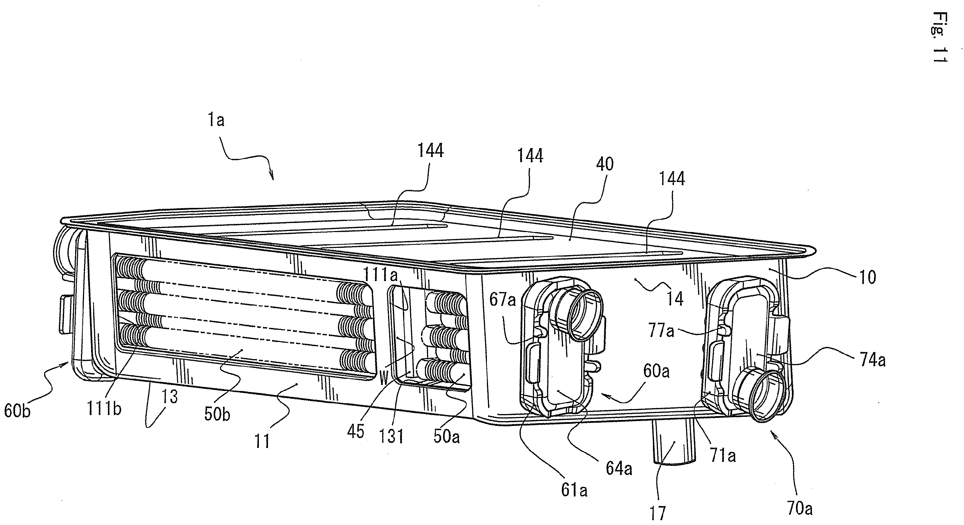

Fig. 11 is a schematic perspective view from the back showing a latent heat exchanger according to the present embodiment 2.

As shown in Fig. 11, a casing of a latent heat exchanger 1a has a casing body 10 and a top board 40 closing an upper opening of the casing body 10, same as those of the latent heat exchanger 1 of the embodiment 1. However, an inside of the casing is partitioned by a partition wall W into a first region on the one side wall 14 side and a second region on the other side wall 15 side, and first absorbing pipes 50a and second absorbing pipes 50b are accommodated respectively in the regions arranged in parallel along the left-right direction. The structures of the first and second heat absorbing pipes 50a, 50b are same as those of embodiment 1.

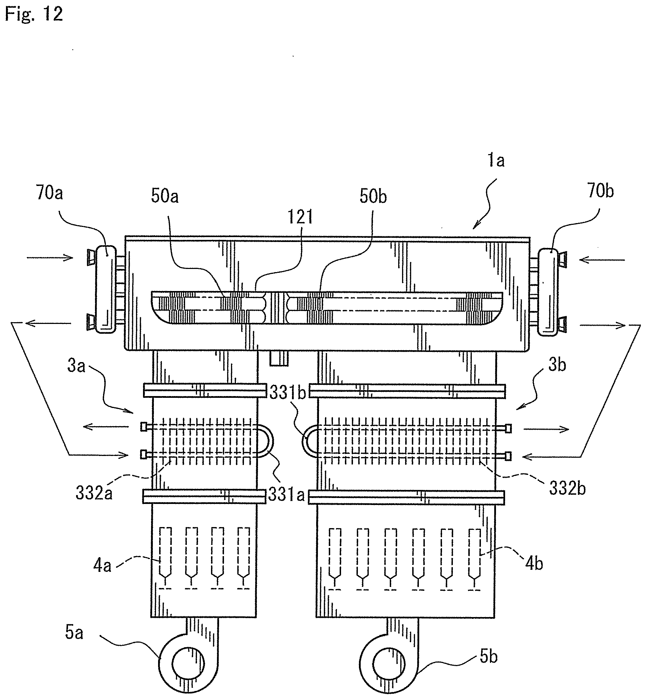

As for the casing body 10, a back wall 11, a front wall 12, a bottom wall 13, one side wall 14, and the other side wall 15 are integrally formed by drawing one single metal plate, same as that of the embodiment 1. Two combustion gas inlet ports 111a, 111b are formed in the back wall 11 so as to introduce combustion gas into the first and second regions respectively. On the other hand, as shown in Fig. 12, one single combustion gas outlet port 121 communicating with the first and second regions is formed in the front wall 12. However, two combustion gas outlet ports may be formed in the front wall 12, same as the back wall 11. Furthermore, although not shown, first upstream end-inserting holes and first downstream end-inserting holes through which upstream ends and downstream ends of the first heat absorbing pipes 50a respectively inserted are formed in the one side wall 14 and second upstream end-inserting holes and second downstream end-inserting holes through which upstream ends and downstream ends of the second heat absorbing pipes 50b respectively inserted are formed in the other side wall 15. Lower protrusions 131 abutting circularly arcuate turn-around portions of the first and second heat absorbing pipes 50a, 50b and a drain discharge opening 17 for discharging the drain are formed in the bottom wall 13.

Thus, in the latent heat exchanger 1a of the present embodiment, the casing body 10 does not have any connection areas by welding or brazing, so that there is no need of welding or brazing to assemble the casing body 10. Also, since no connection area by welding or brazing is formed in the lower area of the casing, the drain is not likely to be retained in the lower area when the drain is generated. Further, since the back wall 11, the front wall 12, the bottom wall 13, the one side wall 14, and the other side wall 15 are integrally formed by the drawing, the casing can be easily formed with fewer members. Furthermore, since only the upper opening of the casing body 10 with less affected by the drain is closed by the top board 40, it is possible to produce the casing having an excellent corrosion resistance without performing welding or brazing but simply by connecting the casing body 10 and the top board 40 by the fastening process.

The top board 40 has the same configuration as that of the top board 40 according to the embodiment 1, and the side baffle plate 45 is provided only in the first region on the one side wall 14 side. Other side baffle plate may be provided also in the second region. However, in a case where the partition wall W is provided after accommodation of the second heat absorbing pipes 50b in the casing body 10, it is possible to dispose the partition wall W near ends of the circularly arcuate turn-around portions of the second heat absorbing pipes 50b. Thus, in the present embodiment, the side baffle plate 45 can be provided in either the first or the second region.

A first inlet header 60a and a first outlet header 70a which are respectively connected to the upstream and downstream ends of the first heat absorbing pipes 50a are arranged outside the one side wall 14 and a second inlet header 60b and a second outlet header 70b which are respectively connected to the upstream and downstream ends of the second heat absorbing pipes 50b are arranged outside the other side wall 15. Those headers respectively have a header main body and a header cover same as those of the embodiment 1.

Fig. 12 is a schematic block diagram showing one example of a water heater having the latent heat exchanger 1a described above.

In the water heater, combustion gas produced by a first gas burner 4a is supplied, by an air supply fan 5a, to a first sensible heat exchanger 3a where sensible heat is recovered and further supplied to the first region of the latent heat exchanger 1a where latent heat is recovered. Similarly, combustion gas produced by a second gas burner 4b is supplied, by an air supply fan 5a, to a second sensible heat exchanger 3b where sensible heat is recovered and further supplied to the second region of the latent heat exchanger 1a where latent heat is recovered. According to the water heater, for example, one heating circuit can be used for a hot water supply circuit and the other heating circuit can be used for a heating circuit.

### (Other Embodiments)

(1) In the embodiments above, the top board is fastened to the casing body by forming the upper flange in the casing body. Alternatively, a casing body may be fastened to a top board by forming an upper flange in the top board.
(2) In the embodiments above, the side baffle plate is connected to the lower surface of the top board. Alternatively, a top board and a side baffle plate which are not connected to each other may be used, and the side baffle plate may be connected to a bottom wall before a casing body is connected to the top board after the accommodation of the heat absorbing pipes. In this case, considering the noise described above, it is preferable that an upper end of the baffle plate are not extended to abut a lower surface of the top board.

As described in detail, the present invention is summarized as follows.

According to one aspect of the present invention, there is provided a latent heat exchanger comprising:
a casing having a flow path of combustion gas therein;
a heat absorbing pipe accommodated in the casing;
an inlet header for introducing fluid to be heated into the heat absorbing pipe; and
an outlet header for discharging the fluid to be heated from the heat absorbing pipe, wherein
the casing has a box-shaped casing body having an upper opening and a top board closing the upper opening of the casing body,
the casing body has a back wall, a front wall, a bottom wall having a drain discharging opening, one side wall having an upstream end-inserting hole through which an upstream end of the heat absorbing pipe is inserted and a downstream end-inserting hole through which a downstream end of the heat absorbing pipe is inserted, and the other side wall,
the back wall, the front wall, the bottom wall, the one side wall, and the other side wall are integrally formed by drawing one single metal plate, and
the inlet header and the outlet header are respectively disposed outside the one side wall and connected to the upstream and downstream ends of the heat absorbing pipe led outside the one side wall through the upstream end-inserting hole and the downstream end-inserting hole.

According to the latent heat exchanger described above, since the back wall, the front wall, the bottom wall, the one side wall, and the other side wall of the casing body are integrally formed by drawing the single metal plate, there is no need of welding or brazing to assemble the casing body. Also, since no connection area by welding or brazing is formed in the lower area of the casing, generated drain is not likely to be retained in the lower area of the casing. Therefore, it makes possible to smoothly discharge the drain from the drain discharge opening formed in the lower area of the casing. Further, since the casing body has the back wall, the front wall, the bottom wall, the one side wall, and the other side wall, integrally formed by the drawing, it makes possible to manufacture the latent heat exchanger easily with fewer members.

In the latent heat exchanger described above, the casing body and the top board may be connected by the fastening process.

According to the latent heat exchanger described above, since the walls of the casing body are integrally formed by drawing the single metal plate, in the assemble of the casing, only the upper opening of the casing body with less affected by the drain is closed by the top board. Thus, it is possible to produce the casing having an excellent corrosion resistance simply by connecting the casing body and the top board by the fastening process.

Preferably, the latent heat exchanger described above has a heat absorbing pipe in the casing having a piping structure in which a straight portion extending between the one side wall and the other side wall and circularly arcuate turn-around portions located at the both ends on the one side wall side and the other side wall side are repeated consecutively. More preferably, the latent heat exchanger having the structure described above further comprises a side baffle plate in a plate shape between the circularly arcuate turn-around portion on the other side wall side and an inner surface of the other side wall.

Since the heat absorbing pipe is arranged densely in the casing by use of the heat absorbing pipe having the above structure, the latent heat exchanger having a small size and higher heat efficiency can be obtained. Further, the casing body having the walls integrally formed by the drawing is used in the latent heat exchanger, so that it is necessary to lead out the upstream and downstream ends of the heat absorbing pipe from the one side wall in connecting the heat absorbing pipe to the inlet header and the outlet header disposed outside the one side wall. Thus, when the upstream and downstream ends of the heat absorbing pipe are inserted through the upstream end-inserting hole and the downstream end-inserting hole, respectively, there occurs a space having a certain volume between the circularly arcuate turn-around portion on the other side wall side and an inner surface of the other side wall. This causes the combustion gas introduced through the combustion gas inlet port to flow in the space with less gas glow resistance, which may result in preventing the combustion gas from efficiently contacting the heat absorbing pipe and reducing in heat efficiency. On the other hand, providing the side baffle plate in the space between the circularly arcuate turn-around portion on the other side wall side and the inner surface of the other side wall causes the combustion gas to flow toward the heat absorbing pipe side, making it easy for the combustion gas to contact the heat absorbing pipe, whereby higher heat efficiency can be obtained.

In the latent heat exchanger described above, when the back wall has a combustion gas inlet port for introducing the combustion gas into the casing and the front wall has a gas combustion outlet port for discharging the combustion gas out of the casing, respectively, the side baffle plate may have inclined faces inclined from ends on an inlet port side and an outlet port side toward a heat absorbing pipe side.

According to the latent heat exchanger described above, the flow path of the combustion gas is formed between the combustion gas inlet port in the back wall and the combustion gas outlet port in the front wall. The side baffle plate has the inclined faces inclined from the ends on the inlet port side and the outlet port side toward the heat absorbing pipe side, so that the combustion gas flows along the inclined faces. Therefore, according to the latent heat exchanger described above, it makes easier for the combustion gas to contact the heat absorbing pipe, thereby allowing further enhancement of the heat efficiency.

Preferably, in the latent heat exchanger described above, the side baffle plate is formed such that an upper end is connected to a lower surface of the top board and a lower end does not abut an inner surface of the bottom wall.

According to the latent heat exchanger described above, the casing in which the side baffle plate is positioned at a predetermined place can be fabricated simply by closing the upper opening of the casing body with the top board to which the side baffle plate is connected. Further, if the side baffle plate extends to such an extent that the lower end thereof abuts the bottom wall, vibration of the side baffle plate is transmitted both to the top board and the bottom wall when the combustion gas passes inside the casing, resulting in easy generation of noise. On the other hand, the side baffle plate is only connected to the lower surface of the top board but not the bottom wall, it makes possible to prevent such noise. Further, flow of drain is not disturbed, whereby it makes possible to discharge the drain smoothly. Moreover, since any connection portions are not formed between the bottom wall and the side baffle plate, there is no need to take care of crevice corrosion due to the drain.

According to a preferable aspect of the present invention whose object is to fix a plurality of the heat absorbing pipes in the casing stably, the latent heat exchanger described above comprises,
a plurality of the heat absorbing pipes accommodated in the casing, wherein
the heat absorbing pipes each in the casing have a piping structure in which a straight portion extending between the one side wall and the other side wall and circularly arcuate turn-around portions are repeated consecutively,
the heat absorbing pipes are stacked at the flattened circularly arcuate turn-around portions between the top board and the bottom wall,
the circularly arcuate turn-around portions of the heat absorbing pipes each have a cross section flattened in a direction that the heat absorbing pipes are stacked one another, and
the top board and the bottom wall respectively have an upper protrusion and an lower protrusion, protruding inwardly into the casing, wherein
the upper protrusion abuts the uppermost circularly arcuate turn-around portions on a top board side and the lower protrusion abuts the bottommost circularly arcuate turn-around portions on a bottom wall side.

According to the latent heat exchanger described above, since the circularly arcuate turn-around portions each of the heat absorbing pipes stacked between the top board and the bottom wall have a flattened cross section, the heat absorbing pipes can be arranged more densely than the heat absorbing pipes having a circular cross section, whereby it makes possible to reduce a height in a direction that the heat absorbing pipes are stacked one another. Further, since the density of the arranged heat absorbing pipes becomes higher, an amount of ineffective combustion gas which is discharged out of the casing without contact relative to the heat absorbing pipes becomes less, whereby higher thermal efficiency can be obtained. On the other hand, in a case where the heat absorbing pipes are stacked between the top board and the bottom wall, vibration and deformation of the heat absorbing pipes are likely to be occurred. However, according to the latent heat exchanger above, the top board and the bottom wall respectively have the upper and lower protrusions which protrude inwardly into the casing and those upper and lower protrusions abut the flattened circularly arcuate turn-around portions of the heat absorbing pipes, so that the heat absorbing pipes can be fixed stably without using other fixing member. Moreover, since the casing can be produced by closing the upper opening of the casing body integrally formed by the back wall, the front wall, the one side wall, and the other side wall, with the top board, the heat absorbing pipes can be fixed upon closing the upper opening with the top board, without using other fixing member. Therefore, high productivity can be obtained.

Preferably, in the latent heat exchanger having the plurality of the heat absorbing pipes,
the heat absorbing pipes each in the casing have a piping structure in which a straight portion extending between the one side wall and the other side wall and the circularly arcuate turn-around portions located at both ends on the one side wall side and the other side wall side are repeated consecutively,
the top board has upper protrusions located at the both ends on the one side wall side and the other side wall side,
the upper protrusions at the both ends respectively abut the uppermost circularly arcuate turn-around portions located at the both ends,
the bottom wall has lower protrusions located at the both ends on the one side wall side and the other side wall side, and
the lower protrusions at the both ends respectively abut the bottommost circularly arcuate turn-around portions located at the both ends.

According to the latent heat exchanger described above, the flattened circularly arcuate turn-around portions of the heat absorbing pipes are formed at the both ends on the one and other side wall sides and the upper and lower protrusions formed in the top board and the bottom wall respectively abut the uppermost and bottommost circularly arcuate turn-around portions at the both ends, so that the heat absorbing pipes can be fixed more stably in the casing.

According to another preferable aspect of the present invention whose object is to prevent water leak from the header, in the latent heat exchanger described above,
at least one of the inlet header and the outlet header has a header main body in a dish shape and a header cover in a dish shape to be internally fitted to the header main body,
the header main body and the header cover are connected by brazing such that openings face each other,
the header main body has a main body bottom plate having connection holes to be connected to the upstream ends or the downstream ends of the heat absorbing pipes and a main body peripheral wall extended from a peripheral end of the main body bottom plate toward a header cover side and opened toward the header cover side,
the header cover has a cover bottom plate having an inflow port or an outflow port and a cover peripheral wall extended from a peripheral end of the cover bottom plate toward a header main body side and opened toward the header main body side, and
the header main body and the header cover are formed such that an outer surface of the cover peripheral wall fits into an inner surface of the main body peripheral wall and a brazing reservoir is formed between the inner surface of the main body peripheral wall and the outer surface of the cover peripheral wall, in a state where the header main body and the header cover are fitted to each other.

In a conventional way of connecting a header main body and a header cover, the brazing material has been applied only on edge face of the main body open end of the main body peripheral wall, so that scattering and dripping of the brazing material easily occur, whereby the header main body and the header cover are difficult to connect to each other reliably. On the other hand, according to the latent heat exchanger described above, the brazing reservoir is formed between the inner surface of the main body peripheral wall and the outer surface of the cover peripheral wall, in a state where the header main body and the header cover are fitted to each other in order to connect the header main boy in a dish shape to the header cover in a dish shape by brazing. Accordingly, not only scattering and dripping of the brazing material can be prevented in a brazing process, but also a connection area between the inner surface of the main body peripheral wall and the outer surface of a cover peripheral wall can be enlarge, as compared to a case where the brazing material is applied only on the edge face of the main body open end as the conventional method.

In the latent heat exchanger having the header including the structure described above,
the main body peripheral wall may be formed such that the main body open end is widen outwardly.

According to the latent heat exchanger described above, it makes possible to enlarge the connection area between the inner surface of the main body peripheral wall and the outer surface of the cover peripheral wall easily.

In the latent heat exchanger having the header including the structure described above,
at least a part of the main body open end of the main body peripheral wall may be extended higher than an outer peripheral surface of the cover bottom plate in a cross-sectional direction, in a state where the header main body and the header cover are fitted to each other.

According to the latent heat exchanger described above, it makes possible to further enlarge the connection area between the inner surface of the main body peripheral wall and the outer surface of the cover peripheral wall.

In the latent heat exchanger having the header including the structure described above,
a claw, which is bent toward the header cover side after the header main body and the header cover are fitted to each other, may be formed in the main body open end of the main body peripheral wall.

When the header main body and the header cover are brazed to each other, the header cover is pressed into the header main body firstly. However, due to fabrication errors of both peripheral walls of those members, the header cover may be shifted with respect to the header main body after pressing-in. As a result, the header main body is not connected to the header cover precisely. On the other hand, the claw to be bent toward the header cover side is provided on the main body open end of the main body peripheral wall, such a shift of the header cover can be prevented by bending the claw after the header cover is pressed into the header main body.

Preferably, in the latent heat exchanger having the header including the structure described above,
the main body peripheral wall is formed into substantially a rectangular shape having a pair of long sides and a pair of short sides, and
the claw is formed in at least one of the main body open end of the pair of the long sides.

More preferably, claws are respectively formed in the main body open end of the pair of the opposing long sides of the main body peripheral wall, and
the claws of the main body peripheral wall formed in the long sides are respectively arranged such that they are not overlapped in a short side direction.

According to the latent heat exchanger described above, the shift of the header cover upon fitting the header cover to the header main body can be reliably prevented.

According to yet another preferable aspect of the present invention whose object is to manufacture a water heater having a plurality of heating circuits,
the latent heat exchanger described above further comprising:
a second heat absorbing pipe accommodated in the casing and arranged in parallel with the heat absorbing pipe;
a second inlet header for introducing second fluid to be heated into the second heat absorbing pipe;
a second outlet header for discharging the second fluid to be heated from the second heat absorbing pipe, wherein
the other side wall has a second upstream end-inserting hole through which an upstream end of the second heat absorbing pipe is inserted and a second downstream end-inserting hole through which a downstream end of the second heat absorbing pipe is inserted, and
the second inlet header and the second outlet header are respectively disposed outside the other side wall and connected to the upstream and downstream ends of the second heat absorbing pipe led outside the other side wall through the second upstream end-inserting hole and the second downstream end-inserting hole.

According to the latent heat exchanger described above, in the latent heat exchanger used for a water heater having the plurality of the heating circuits, not only corrosion due to the drain can be prevented, but also the latent heat exchanger can be manufactured easily.

Further, according to the present invention, a water heater having the latent heat exchanger described above can be provided.

The present application claims priorities under the Paris Convention on Japanese patent applications No. 2010-290153, No. 2010-290154, and No. 2010-290155, all of which are filed on December 27, 2010.

### Industrial Applicability

According to the present invention, there can be provided a latent heat exchanger and water heater using thereof which are excellent in durability and easy manufactured.

## Claims

1. A latent heat exchanger (1) comprising:
a casing (2) having a flow path of combustion gas therein;
a heat absorbing pipe (50) accommodated in the casing (2) ;
an inlet header (60) for introducing fluid to be heated into the heat absorbing pipe (50); and
an outlet header (70) for discharging the fluid to be heated from the heat absorbing pipe (50), wherein
the casing (2) has a box-shaped casing body (10) having an upper opening (16) and a top board (40) closing the upper opening (16) of the casing body (10),
the casing body (10) has a back wall (11), a front wall (12), a bottom wall (13) having a drain discharging opening (17), one side wall (14) having an upstream end-inserting hole (141) through which an upstream end (53) of the heat absorbing pipe (50) is inserted and a downstream end-inserting hole (142) through which a downstream end (54) of the heat absorbing pipe (50) is inserted, and another side wall (15),
the back wall (11), the front wall (12), the bottom wall (13), the one side wall (14), and the other side wall (15) are integrally formed by drawing one single metal plate,
the heat absorbing pipe (50) in the casing (2) has a piping structure in which a straight portion (51) extending between the one side wall (14) and the other side wall (15) and circularly arcuate turn-around portions (52) located at both ends on one side wall (14) side and the other side wall (15) side are repeated consecutively, and
the inlet header (60) and the outlet header (70) are respectively disposed outside the one side wall (14) and connected to the upstream and downstream ends (53)(54) of the heat absorbing pipe (50) led outside the one side wall (14) through the upstream end-inserting hole (141) and the downstream end-inserting hole (142); and
a side baffle plate (45) in a plate shape provided between the circularly arcuate turn-around portions (52) located on the other side wall (15) side and an inner surface of the other side wall (15), wherein
an upper end of the side baffle plate (45) is connected to a lower surface of the top board (40), and
a lower end of the side baffle plate (45) is disposed such that the lower end does not abut an inner surface of the bottom wall (13).

2. The latent heat exchanger according to claim 1, wherein
the casing body (10) and the top board (40) are connected by a fastening process.

3. The latent heat exchanger (1) according to claim 1 or 2, wherein
the back wall (11) has a combustion gas inlet port (111) for introducing the combustion gas into the casing (2),
the front wall (12) has a combustion gas outlet port (121) for discharging the combustion gas out of the casing (2), and
the side baffle plate (45) has inclined faces (452) inclined from ends on an inlet port side and an outlet port side toward a heat absorbing pipe side.

4. A water heater having the latent heat exchanger (1) according to any one of claims 1 to 3.

5. The latent heat exchanger (1) according to claim 1, wherein
the top board (40) and the bottom wall (13) respectively have an upper protrusion (144) and an lower protrusion (131), protruding inwardly into the casing (2), and
the upper protrusion (144) abuts the uppermost circularly arcuate turn-around portion on a top board side and the lower protrusion (131) abuts the bottommost circularly arcuate turn-around portion on a bottom wall side.

6. The latent heat exchanger (1) according to claim 3, further comprising an upper baffle plate (46) inclined downward from a lower surface of the top board (40) on a front wall side toward an upper edge of an opening of the gas outlet port (121).

7. The latent heat exchanger (1) according to any one of claims 1 to 6 , wherein
a plurality of the heat absorbing pipes (50) are accommodated in the casing (2), wherein
the circularly arcuate turn-around portions (52) of the heat absorbing pipes (50) each have a cross section flattened in a direction that the heat absorbing pipes (50) are stacked one another, and
the heat absorbing pipes (50) are stacked at the flattened circularly arcuate turn-around portions between the top board (40) and the bottom wall (13).

8. A method of manufacturing the latent heat exchanger (1) according to claim 1, comprising the steps of:
inserting the upstream and downstream ends (53)(54) of the heat absorbing pipe (50) through the upstream end-inserting hole (141) and the downstream end-inserting hole (142) of the one side wall (14) respectively;
leading the upstream and downstream ends (53)(54) of the heat absorbing pipe (50) outside the one side wall (14);
applying a brazing material to boundaries between outer surfaces of the led-out heat absorbing pipe (50) and the upstream ends-inserting hole (141) and the downstream ends-inserting hole (142);
inserting the upstream and the downstream ends (53)(54) of the led-out heat absorbing pipe (50) through connection holes (160)(170) of header main bodies (61)(71) of the inlet and outlet headers (60)(70) respectively:
applying a brazing material to boundaries between outer surfaces of the upstream and downstream ends (53)(54) of the heat absorbing pipe (50) and the connection holes (160) (170);
closing openings of the header main bodies (61)(71) with header covers (64)(74) respectively;
applying a brazing material to boundaries between inner surfaces of main body peripheral walls (63)(73) of the header main bodies (61)(71) and outer surfaces of cover peripheral walls (66)(76) of the header covers (64) (74);
closing the upper opening (16) of the casing body (10) with the top board (40) to form a subassembly in which the casing body (10), the top board (40), the heat absorbing pipe (50), the inlet header (60), and the outlet header (70) are integrally formed; and
heating the subassembly in a heating furnace.

## Patentansprüche

1. Tauscher für latente Wärme (1), umfassend:
ein Gehäuse (2), das einen Strömungspfad von Verbrennungsgas darin aufweist;
ein wärmeabsorbierendes Rohr (50), das in dem Gehäuse (2) aufgenommen ist;
einen Einlasskopf (60) zum Einleiten von zu erwärmendem Fluid in das wärmeabsorbierende Rohr (50); und
einen Auslasskopf (70) zum Ablassen des zu erwärmenden Fluids aus dem wärmeabsorbierenden Rohr (50), wobei
das Gehäuse (2) einen kastenförmigen Gehäusekörper (10) aufweist, der eine obere Öffnung (16) und eine obere Platte (40) aufweist, welche die obere Öffnung (16) des Gehäusekörpers (10) verschließt,
der Gehäusekörper (10) Folgendes aufweist: eine Rückwand (11), eine Vorderwand (12), eine Bodenwand (13), die eine Ablassablauföffnung (17) aufweist, eine Seitenwand (14), die ein Einführungsloch für ein stromaufwärtiges Ende (141) aufweist, durch das ein stromaufwärtiges Ende (53) des wärmeabsorbierenden Rohrs (50) eingeführt wird, und ein Einführungsloch für ein stromabwärtiges Ende (142), durch das ein stromabwärtiges Ende (54) des wärmeabsorbierenden Rohrs (50) eingeführt wird, und eine andere Seitenwand (15),
die Rückwand (11), die Vorderwand (12), die Bodenwand (13), die eine Seitenwand (14) und die andere Seitenwand (15) durch Ziehen einer einzigen Metallplatte einstückig ausgebildet sind,
das wärmeabsorbierende Rohr (50) in dem Gehäuse (2) eine Rohrstruktur aufweist, in der sich ein gerader Abschnitt (51) zwischen der einen Seitenwand (14) und der anderen Seitenwand (15) erstreckt und kreisbogenförmige Umkehrabschnitte (52), die sich an beiden Enden an einer Seite der Seitenwand (14) und einer Seite der anderen Seitenwand (15) befinden, aufeinanderfolgend wiederholt werden und
der Einlasskopf (60) und der Auslasskopf (70) jeweils außerhalb der einen Seitenwand (14) angeordnet und mit den stromaufwärtigen und stromabwärtigen Enden (53) (54) des wärmeabsorbierenden Rohrs (50) verbunden sind, das außerhalb der einen Seitenwand (14) durch das Einführungsloch für ein stromaufwärtiges Ende (141) und das Einführungsloch für ein stromabwärtiges Ende (142) geführt ist; und
eine Seitenleitplatte (45) in einer Plattenform, die zwischen den kreisbogenförmigen Umkehrabschnitten (52) bereitgestellt ist, die sich an der Seite der anderen Seitenwand (15) und einer Innenfläche der anderen Seitenwand befinden (15), wobei
ein oberes Ende der Seitenleitplatte (45) mit einer unteren Fläche der oberen Platte (40) verbunden ist und
ein unteres Ende der Seitenleitplatte (45) derart angeordnet ist, dass das unter Ende nicht an die Innenfläche der Bodenwand (13) angrenzt.

2. Tauscher für latente Wärme nach Anspruch 1, wobei
der Gehäusekörper (10) und die obere Platte (40) durch ein Befestigungsverfahren verbunden sind.

3. Tauscher für latente Wärme (1) nach Anspruch 1 oder 2, wobei
die Rückwand (11) einen Verbrennungsgaseinlassanschluss (111) zum Einleiten des Verbrennungsgases in das Gehäuse (2) aufweist,
die Vorderwand (12) einen Verbrennungsgasauslassanschluss (121) zum Ablassen des Verbrennungsgases aus dem Gehäuse aufweist (2) und
die Seitenleitplatte (45) geneigte Flächen (452) aufweist, die von Enden einer Einlassanschlussseite und einer Auslassanschlussseite in Richtung einer Seite des wärmeabsorbierenden Rohrs geneigt ist.

4. Warmwasserbereiter, der den Tauscher für latente Wärme (1) nach einem der Ansprüche 1 bis 3 aufweist.

5. Tauscher für latente Wärme (1) nach Anspruch 1, wobei
die obere Platte (40) und die Bodenwand (13) jeweils einen oberen Vorsprung (144) und einen unteren Vorsprung (131) aufweisen, die nach innen in das Gehäuse (2) vorstehen, und
der obere Vorsprung (144) an einer Seite der oberen Platte an den obersten kreisbogenförmigen Umkehrabschnitt angrenzt und der untere Vorsprung (131) an einer Bodenplattenseite an den untersten kreisbogenförmigen Umkehrabschnitt angrenzt.

6. Tauscher für latente Wärme (1) nach Anspruch 3, ferner umfassend eine obere Leitplatte (46), die an einer Vorderwandseite in Richtung einer oberen Kante einer Öffnung des Gasauslassanschlusses (121) von einer unteren Fläche der oberen Platte (40) nach unten geneigt ist.

7. Tauscher für latente Wärme (1) nach einem der Ansprüche 1 bis 6, wobei
eine Vielzahl der wärmeabsorbierenden Rohre (50) in dem Gehäuse (2) aufgenommen ist, wobei die kreisbogenförmigen Umkehrabschnitte (52) der wärmeabsorbierenden Rohre (50) jeweils einen Querschnitt aufweisen, der in einer Richtung abgeflacht ist, in der die wärmeabsorbierenden Rohre (50) aufeinandergestapelt sind, und
die wärmeabsorbierenden Rohre (50) an den abgeflachten kreisbogenförmigen Umkehrabschnitten zwischen der oberen Platte (40) und der Bodenwand (13) gestapelt sind.

8. Verfahren zum Herstellen des Tauschers für latente Wärme (1) nach Anspruch 1, umfassend die folgenden Schritte:
Einführen der stromaufwärtigen und stromabwärtigen Enden (53) (54) des wärmeabsorbierenden Rohrs (50) jeweils durch das Einführungsloch für ein stromaufwärtiges Ende (141) und das Einführungsloch für ein stromabwärtiges Ende (142) der einen Seitenwand (14);
Führen der stromaufwärtigen und stromabwärtigen Enden (53) (54) des wärmeabsorbierenden Rohrs (50) außerhalb der einen Seitenwand (14);
Aufbringen eines Hartlotmaterials auf Begrenzungen zwischen Außenflächen des herausgeführten wärmeabsorbierenden Rohrs (50) und dem Einführungsloch für ein stromaufwärtiges Ende (141) und dem Einführungsloch für ein stromabwärtiges Ende (142);
Einführen der stromaufwärtigen und der stromabwärtigen Enden (53) (54) des herausgeführten wärmeabsorbierenden Rohrs (50) jeweils durch Verbindungslöcher (160) (170) der Kopfhauptkörper (61) (71) des Einlass- und Auslasskopfs (60) (70);
Aufbringen eines Hartlotmaterials auf Begrenzungen zwischen Außenflächen des stromaufwärtigen und stromabwärtigen Endes (53) (54) des wärmeabsorbierenden Rohrs (50) und den Verbindungslöchern (160) (170);
Schließen der Öffnungen der Kopfhauptkörper (61) (71) jeweils mit Kopfabdeckungen (64) (74);
Aufbringen eines Hartlotmaterials auf Begrenzungen zwischen Innenflächen von Hauptkörperumfangswänden (63) (73) der Kopfhauptkörper (61) (71) und Außenflächen von Abdeckungsumfangswänden (66) (76) der Kopfabdeckungen (64) (74);
Schließen der oberen Öffnung (16) des Gehäusekörpers (10) mit der oberen Platte (40), um eine Unterbaugruppe zu bilden, in welcher der Gehäusekörper (10), die obere Platte (40), das wärmeabsorbierende Rohr (50), der Einlasskopf (60) und der Auslasskopf (70) einstückig ausgebildet sind; und
Erwärmen der Unterbaugruppe in einem Wärmeofen.

## Revendications

1. Échangeur de chaleur latente (1), comprenant :
un carter (2) au sein duquel se trouve un chemin d'écoulement du gaz de combustion ;
un tuyau absorbeur de chaleur (50) placé dans le carter (2) ;
un collecteur d'entrée (60) pour l'introduction d'un fluide à chauffer dans le tuyau absorbeur de chaleur (50) ; et
un collecteur de sortie (70) pour décharger, du tuyau absorbeur de chaleur (50), le fluide à chauffer, où
le carter (2) possède un corps de carter parallélépipédique (10) avec une ouverture supérieure (16) et un panneau supérieur (40) fermant l'ouverture supérieure (16) du corps du carter (10),
le corps du carter (10) possède une paroi postérieure (11), une paroi antérieure (12), une paroi inférieure (13) dotée d'une ouverture d'évacuation (17), une paroi latérale (14) possédant un orifice d'insertion en amont (141) par lequel on insère une extrémité en amont (53) du tuyau absorbeur de chaleur (50), et un orifice d'insertion de l'extrémité en aval (142) par lequel on insère une extrémité en aval (54) du tuyau absorbeur de chaleur (50), et une autre paroi latérale (15),
la paroi postérieure (11), la paroi antérieure (12), la paroi inférieure (13), l'une paroi latérale (14) et l'autre paroi latérale (15) sont façonnées de façon intégrale par l'emboutissage d'une tôle métallique unique,
le tuyau absorbeur de chaleur (50) dans le carter (2) possédant une structure tubulaire dans laquelle une partie droite (51) s'étendant entre l'une paroi latérale (14) et l'autre paroi latérale (15), et des parties de retournement circulairement arquées (52) situées aux deux bouts sur un côté d'une paroi latérale (14) et l'autre côté d'une paroi latérale (15), se répètent de façon consécutive, et
le collecteur d'entrée (60) et le collecteur de sortie (70) sont disposés respectivement hors de l'une paroi latérale (14) et raccordés aux extrémités en amont et en aval (53)(54) du tuyau absorbeur de chaleur (50) menées hors de l'une paroi latérale (14) à travers l'orifice d'insertion en amont (141) et l'orifice d'insertion en aval (142) ; et
une chicane latérale (45) en forme de plaque placée entre les parties de retournement circulairement arquées (52) situées sur le côté de l'autre paroi latérale (15) et une surface interne de l'autre paroi latérale (15), dans laquelle
une extrémité supérieure de la chicane latérale (45) est raccordée à une surface inférieure du panneau supérieur (40), et
une extrémité inférieure de la chicane latérale (45) est disposée de sorte que l'extrémité inférieure ne bute pas contre une surface intérieure de la paroi inférieure (13).

2. Échangeur de chaleur latente selon la revendication 1, dans lequel
le corps du carter (10) et le panneau supérieur (40) sont raccordés par un système de fixation.

3. Échangeur de chaleur latente (1) selon la revendication 1 ou 2, dans lequel
la paroi postérieure (11) possède un orifice d'entrée de gaz de combustion (111) pour l'introduction du gaz de combustion dans le carter (2),
la paroi antérieure (12) possède un orifice de sortie de gaz de combustion (121) pour l'évacuation du gaz de combustion hors du carter (2), et
la chicane latérale (45) possède des faces inclinées (452), inclinées depuis des extrémités sur un côté d'orifice d'entrée et un côté d'orifice de sortie en direction d'un côté de tuyau absorbeur de chaleur.

4. Chauffe-eau muni d'un échangeur de chaleur latente (1) selon une quelconque des revendications 1 à 3.

5. Échangeur de chaleur latente (1) selon la revendication 1, dans lequel
le panneau supérieur (40) et la paroi inférieure (13) respectivement sont munis d'une saillie supérieure (144) et d'une saillie inférieure (131), faisant saillie vers l'intérieur dans le carter (2), et
la saillie supérieure (144) venant buter contre la partie de retournement circulairement arquée supérieure sur un côté du panneau supérieur, et la saillie inférieure (131) venant buter contre la partie de retournement circulairement arquée inférieure sur un côté de paroi inférieure.

6. Échangeur de chaleur latente (1) selon la revendication 3, comprenant en outre une chicane supérieure (46) inclinée vers le bas depuis une surface inférieure du panneau supérieur (40) sur un côté de paroi antérieure en direction d'un bord supérieur d'une ouverture de l'orifice de sortie de gaz (121).

7. Échangeur de chaleur latente (1) selon une quelconque des revendications 1 à 6, dans lequel
une pluralité de tuyaux absorbeurs de chaleur (50) est placée dans le carter (2), les parties de retournement circulairement arquées (52) des tuyaux absorbeurs de chaleur (50) possédant chacune une section transversale aplatie dans une direction dans laquelle les tuyaux absorbeurs de chaleur (50) sont empilés l'un sur l'autre, et
les tuyaux absorbeurs de chaleur (50) sont empilés aux parties de retournement circulairement arquées (52) aplaties entre le panneau supérieur (40) et la paroi inférieure (13).

8. Méthode de fabrication de l'échangeur de chaleur latente (1) selon la revendication 1, comprenant les étapes suivantes :
insertion des extrémités en amont et en aval (53)(54) du tuyau absorbeur de chaleur (50) à travers l'orifice d'insertion en amont (141) et l'orifice d'insertion de l'extrémité en aval (142) de l'une paroi latérale (14) respectivement ;
conduite des extrémités en amont et en aval (53)(54) du tuyau absorbeur de chaleur (50) hors de l'une paroi latérale (14) ;
application d'une matière de brasage sur les limites entre des surfaces extérieures du tuyau absorbeur de chaleur (50) conduit vers l'extérieur, et l'orifice d'insertion des extrémités en amont (141) et l'orifice d'insertion des extrémités en aval (142) ;
insertion des extrémités en amont et en aval (53)(54) du tuyau absorbeur de chaleur (50) conduit vers l'extérieur à travers des orifices de raccordement (160)(170) des corps principaux de collecteur (61)(71) des collecteurs d'entrée et de sortie (60)(70) respectivement :
application d'une matière de brasage sur les limites entre des surfaces extérieures des extrémités en amont et en aval (53)(54) du tuyau absorbeur de chaleur (50) et les orifices de raccordement (160)(170) ;
fermeture des ouvertures des corps principaux de collecteur (61)(71) à l'aide de couvercles de collecteur (64)(74) respectivement :
application d'une matière de brasage sur les limites entre des surfaces intérieures des parois périphériques du corps principal (63)(73) des corps principaux de collecteur (61)(71) et des surfaces extérieures des parois périphériques du couvercle (66)(76) des couvercles de collecteur (64)(74) ;
fermeture de l'ouverture supérieure (16) du corps du carter (10) à l'aide du panneau supérieur (40) pour la formation d'un sous-ensemble dans lequel sont formés de façon intégrale le corps de carter (10), le panneau supérieur (40), le tuyau absorbeur de chaleur (50), le collecteur d'entrée (60), et le collecteur de sortie (70) ; et
chauffage du sous-ensemble dans un four de chauffage.
